**Europäisches Patentamt**

(19) **European Patent Office**

**Office européen des brevets**

(11) Veröffentlichungsnummer: **0 035 208**
**B1**

(12) # EUROPÄISCHE PATENTSCHRIFT

(45) Veröffentlichungstag der Patentschrift:
**29.05.85**

(51) Int. Cl.⁴: **G 01 N 25/00**, G 01 M 9/00,
G 03 C 5/26

(21) Anmeldenummer: **81101299.6**

(22) Anmeldetag: **23.02.81**

(54) **Verfahren zum Sichtbarmachen von stationären Wärmeübergangskoeffizientenfeldern auf photochemischem Wege.**

(30) Priorität: **04.03.80 DE 3008265**

(43) Veröffentlichungstag der Anmeldung:
**09.09.81 Patentblatt 81/36**

(45) Bekanntmachung des Hinweises auf die Patenterteilung:
**29.05.85 Patentblatt 85/22**

(84) Benannte Vertragsstaaten:
**AT CH DE FR GB LI NL SE**

(56) Entgegenhaltungen:
**EP - A - 0 017 752**
**DE - A - 2 102 584**
**DE - A - 2 133 865**
**DE - A - 2 741 405**
**DE - B - 2 133 834**

(73) Patentinhaber: **Siemens Aktiengesellschaft, Berlin und München Wittelsbacherplatz 2, D-8000 München 2 (DE)**

(72) Erfinder: **Montag, Bernhard, Nordring 22,
D-8550 Forchheim (DE)**
Erfinder: **Opitz, Heinrich, Dipl.-Chem., Breslauer Strasse 1, D-8520 Erlangen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zum Sichtbarmachen von stationären Wärmeübergangskoeffizientenfeldern auf photochemischem Wege durch Auftragen einer feuchten Photogelatineschicht auf eine mit einem Gas angeströmte Fläche.

Ein vorgeschlagenes Verfahren zur Darstellung von Wärmeübergangskoeffizientenfeldern »Isohumidenverfahren« nach DE-A-2 911 821 benutzt zur Sichtbarmachung der Isohumiden eine rein photographische Entwicklung. Stationäre Wärmeübergangskoeffizientenfelder werden sichtbar gemacht durch Abpressen von exponierten Naßfilmen auf unbelichtete Filme in der Dunkelkammer, Bekeimung der Naßkopie mit Schwefelwasserstoffgas und Entwicklung zum transparenten Silberbild mit handelsüblichen photographischen Entwicklern. Dieses Verfahren ist an eine Dunkelkammer gebunden und es wird zur Erzeugung von entwickelbaren Bildkeimen in der photographischen Schicht des Naßfilmes Schwefelwasserstoff eingesetzt. Es sind vor allem seine hohe Toxizität und Geruchsbelastung von Nachteil. Eine Abzugsanlage ist erforderlich.

Aufgabe der Erfindung ist die bildmäßige Darstellung von stationären Wärmeübergangskoeffizientenfeldern durch Naßfilmtechnik auf photographischen Filmen unter Vermeidung der erwähnten Nachteile.

Diese Aufgabe wird nach der Erfindung dadurch gelöst, daß ein im Gasstrom, insbesondere im Luftstrom exponiertes unsichtbares Restfeuchteprofil bei Tageslicht in ein alkoholisches Entwicklerlösungsgemisch, das Thiocetamid, Thiobenzamid, Thiosemicarbazid, Phenylthioharnstoff oder N-Alkylthioharnstoff enthält, getaucht und in ein Silbersulfid-Strichphotogramm übergeführt wird. Die Konzentration an der Thioverbindung beträgt vorzugsweise 0,5 bis 2 g Substanz, bezogen auf 100 ml Lösungsmittelgemisch.

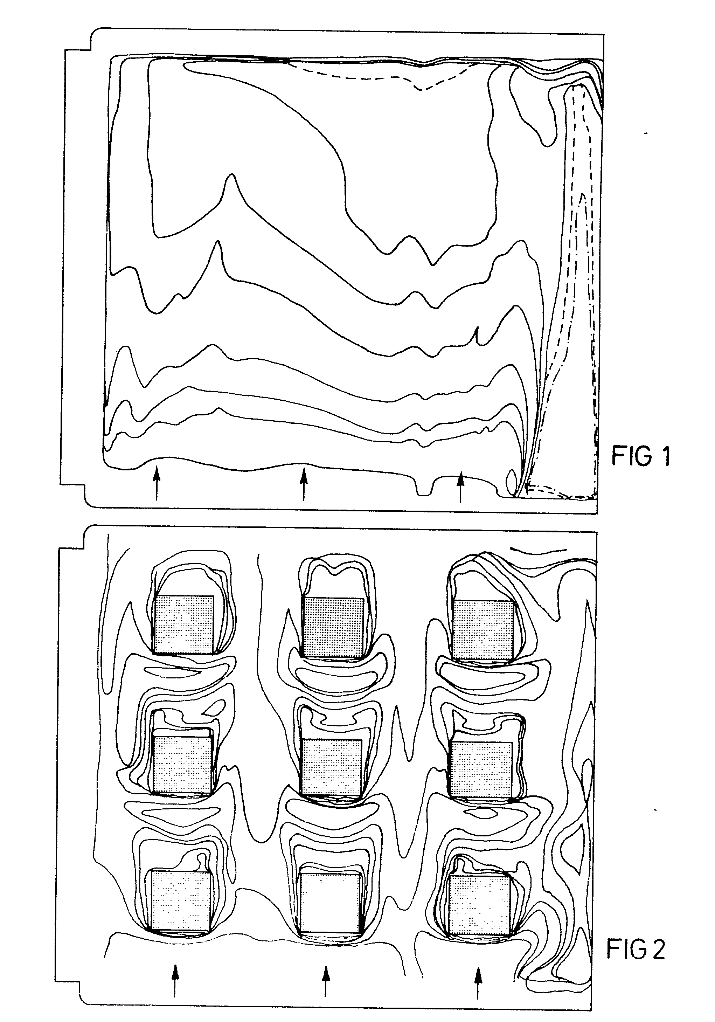

Es wird zunächst in der bekannten Sequenztechnik eine Isohumidenschar durch abgestufte Expositionszeiten der einzelnen Naßfilme hergestellt. Die Entwicklung der transparenten Silbersulfid-Strichphotogramme erfolgt nach der Erfindung einfach durch Tauchen in eine eine organische Thioverbindung enthaltende alkoholische Lösung von Äthanol- oder Propanolamin enthaltendes Propandiol und der in der Phototechnik üblichen Nachbehandlung wie Fixieren, Wässern und Trocknen. Die verwendeten Thioverbindungen sind im Gegensatz zu Schwefelwasserstoff nicht gesundheitsschädlich. Die Entwicklung jeder einzelnen Isohumide zu einem sichtbaren transparenten Photogramm verläuft außerordentlich steil. Es entsteht ein typisches Strichphotogramm, vgl. Fig. 1.

Zur Durchführung des Verfahrens dienen Propandiolbäder mit einem Gehalt von 2,5—5 Vol.-% Äthanol- oder Propanolamin.

Die bei Durchführung des erfindungsgemäßen Verfahrens erhaltenen Schwarz-Weiß-Photogramme können anschließend mit einem Farbkopierverfahren, beispielsweise Agfa »Transparex®« 3M-Colorkey, Reguprint u. a. in farbige Konturen umgewandelt werden, wobei zahlreiche Farben wählbar sind. Die Farbfolien-Kopien ergeben passend übereinandergelegt ein mehrfarbiges transparentes »Isohumiden-Sandwich«.

Ein Isohumiden-Sandwich, bei dem mehrere transparente farbige Isohumidenkonturen übereinandergeschichtet sind, gibt den geometrischen Verlauf der Wärmeübergangsbereiche sowie deren quantitative Abfolge wieder.

Mit der nach dem erfindungsgemäßen Verfahren erhaltenen Isohumidenschar gelingt es durch Zuordnung eines Wärmeübergangskoeffizienten mit Hilfe einer Eichung die anderen physikalischen Werte zu ermitteln.

Das Verfahren kann angewendet werden zur Aufzeichnung von stationären Strömungszuständen in Gebläseläufern, Gebläsestatoren und -gehäusen.

Die Erfindung wird durch die folgenden Beispiele näher erläutert.

### Beispiel 1

Zur Aufnahme eines Wärmeübergangskoeffizientenfeldes an der Unterseite einer zwangsluftgekühlten elektronischen Bauteilgruppe wird eine Isohumidenschar wie folgt erstellt. Mehrere in Wasser gequollene photographische Filme werden bei Tageslicht mit steigenden Expositionszeiten auf der zu kühlenden Fläche nacheinander der Luftströmung ausgesetzt. Zur Umwandlung des noch unsichtbaren Restfeuchteprofils auf den exponierten Naßfilmen in sichtbare, strichförmige Isohumiden werden folgende Arbeitsgänge durchlaufen:

a) Entwicklung im Entwicklerbad bei Raumtemperatur und Tageslicht. Dieses Bad setzt sich wie folgt zusammen: Mit Propandiol werden entweder 2,5 Vol.-% Äthanolamin oder 2,5% Propanolamin vermischt. In dieser Lösung werden 0,5—1 g Thioacetamid auf je 100 ml Lösungsmittelgemisch gelöst. Nach 2—5 min Tauchzeit wird ein strichartiges Bild entwickelt.

b) Dieses Bild wird in Alkohol bei Zimmertemperatur etwa 1 min unter Bewegung zur Entfernung von Entwicklerresten gespült.

c) Sodann erfolgt die Klärung des Strichbildes (Isohumide) in einem handelsüblichen Fixierbad etwa 5 min.

d) Spülen in Wasser.

e) Trocknen an Luft.

### Beispiel 2

Zur Aufnahme eines Wärmeübergangskoeffizientenfeldes auf einer zwangsluftgekühlten elektronischen Flachbaugruppe wird eine Isohumidenschar gemäß Fig. 2 wie folgt erstellt:

Mehrere in Wasser gequollene photographische Filme werden bei Tageslicht mit steigenden Expositionszeiten auf der zu kühlenden Fläche nacheinander der Luftströmung ausgesetzt. Zur Umwandlung des noch unsichtbaren Restfeuchteprofils auf den exponierten Naßfilmen in sichtbare, strichförmige Isohumiden werden folgende Arbeitsgänge durchlaufen

a)  Entwicklung im Entwicklerbad bei Raumtemperatur und Tageslicht. Dieses Bad setzt sich wie folgt zusammen: Mit Propandiol werden entweder 2,5 Vol.-% Äthanolamin oder 2,5 Vol.-% Propanolamin vermischt. In dieser Lösung werden 0,5—1 g N-Alkylthioharnstoff auf je 100 ml Lösungsmittelgemisch gelöst. Nach 2—5 min Tauchzeit wird ein strichartiges Bild entwickelt.

b)  Dieses Bild wird in Alkohol bei Zimmertemperatur etwa 1 min unter Bewegung zur Entfernung von Entwicklerresten gespült.

c)  Sodann erfolgt die Klärung des Strichbildes (Isohumide) in einem handelsüblichen Fixierbad.

d)  Spülen in Wasser.

e)  Trocknen an Luft.

## Patentansprüche

1. Verfahren zum Sichtbarmachen von stationären Wärmeübergangskoeffizientenfeldern auf photochemischem Wege durch Auftragen einer feuchten Photogelatineschicht auf eine mit einem Gas angeströmte Fläche, dadurch gekennzeichnet, daß ein im Gasstrom, insbesondere Luftstrom exponiertes, unsichtbares Restfeuchteprofil bei Tageslicht in ein alkoholisches Entwicklerlösungsgemisch, das Thiocetamid, Thiobenzamid, Thiosemicarbazid, Phenylthioharnstoff oder N-Alkylthioharnstoff enthält, getaucht und in ein Silbersulfid-Strichphotogramm übergeführt wird.

2. Verfahren nach Anspruch 1, dadurch gekennzeichnet, daß von der Thioverbindung 0,5 bis 2 g, bezogen auf 100 ml Lösungsmittelgemisch, vorhanden sind.

## Claims

1. A method of rendering visible stationary heat transfer coefficient fields by photochemical means by applying a moist photo-gelatin layer onto a surface over which a gas flow has been passed, characterised in that an invisible residual moisture profile, which has been exposed to the gas flow, in particular the air flow, is immersed in daylight in an alcoholic developer solvent mixture which contains thiocetamide, thiobenzamide, thiosemicarbazide, phenylthiourea or N-alkylthiourea, and is converted into a silver sulfide-line photograph.

2. A method as claimed in Claim 1, characterised in that 0.5 to 2 g of the thiocompound are present per 100 ml of solvent mixture.

## Revendications

1. Procédé pour rendre visibles par voie photochimique des plages stationnaires de coefficients de transmission de la chaleur, par dépôt d'une couche humide de gélatine photographique sur une surface sur laquelle afflue un gaz, caractérisé en ce qu'il consiste à tremper, à la lumière du jour, dans un mélange alcoolique de révélateurs, qui contient du thioacétamide, du thiobenzamide, du thiosemicarbazide, de la phénylthiourée ou une N-alcoylthiourée, un profil d'humidité résiduelle invisible exposé au courant gazeux, notamment au courant d'air, et à le transformer en un photogramme au trait au sulfure d'argent.

2. Procédé suivant la revendication 1, caractérisé en ce que de 0,5 à 2 grammes du composé thio sont présents pour 100 ml de mélange de solvants.

0 035 208

FIG 1

FIG 2